# EUROPÄISCHE PATENTSCHRIFT

(11) **EP 2 822 805 B1**
(45) Veröffentlichungstag und Bekanntmachung des Hinweises auf die Patenterteilung: **18.11.2015**
(21) Anmeldenummer: 12813786.6
(22) Anmeldetag: 13.12.2012
(51) Int. Cl.: B60L 11/18, G01D 4/00, G01R 22/06, G01R 22/00, G07C 5/00, H04L 9/32

(54) **ELEKTRONISCHES TYPENSCHILD FÜR MESSGERÄTE**
ELECTRONIC IDENTIFICATION PLATE FOR MEASURING DEVICES
PLAQUE SIGNALÉTIQUE ÉLECTRONIQUE CONÇUE POUR DES APPAREILS DE MESURE

(30) Priorität: 09.03.2012 DE 102012004542
(43) Veröffentlichungstag der Anmeldung: 14.01.2015
(73) Patentinhaber: RWE AG, 45128 Essen (DE)
(72) Erfinder: GAUL, Armin, 59379 Selm (DE); NAUERT, Dirk, 44135 Dortmund (DE); KONZEN, Willi, 45239 Essen (DE); MEIER, Detlef, 45326 Essen (DE)
(74) Vertreter: Cohausz & Florack
(86) Internationale Anmeldenummer: PCT/EP2012/075326
(87) Internationale Veröffentlichungsnummer: WO 2013/131591

(56) Entgegenhaltungen:
- DE-A1-102010 046 174
- US-A1- 2010 237 985
- US-A1- 2010 315 197
- US-A1- 2011 140 835

## Beschreibung

Der Gegenstand betrifft ein Verfahren sowie eine Vorrichtung zur elektronischen Sicherung eines Stromzählerdatums.

Das Eichrecht verlangt für Messeinrichtungen, wie beispielsweise Stromzähler, Gaszähler oder Wasserzähler, die Zugänglichkeit des Typenschilds sowie des Eichstempels für den Nutzer. Dabei muss für den Nutzer der jeweiligen Messeinrichtung zumindest das Typenschild sowie der Eichstempel, auf dem zumindest das Eichjahr und/oder die Eichgültigkeit vermerkt ist, sichtbar angebracht werden.

Es gibt jedoch Fälle, in denen aus technischen Gründen die Sichtbarkeit des Typenschilds sowie des Eichstempels nicht möglich ist. In diesen Fällen sieht das Eichrecht vor, dass das Typenschild samt Eichstempel bzw. eine Kopie des Typenschildes samt Eichstempel an einer anderen Stelle als an der Messeinrichtung angeordnet wird. Dies kann beispielsweise an einem das Messgerät umgebenden Gehäuse sein. Das Anbringen des Typenschilds räumlich getrennt von der Messeinrichtung muss jedoch unter Aufsicht der Prüfstelle, gegebenenfalls einer Eichbehörde, erfolgen.

Ferner wird in diesem Fall verlangt, dass technisch sichergestellt ist, dass, wenn das Typenschild ersetzt wird, die zugehörige Messeinrichtung ebenfalls gewechselt wird. Dies soll verhindern, dass das Typenschild, welches nicht an der Messeinrichtung angeordnet ist, von einem Dritten entfernt und durch ein anderes Typenschild ersetzt wird, ohne dass die Messeinrichtung ersetzt wird. Ansonsten wäre es möglich, ein manipuliertes Typenschild anzubringen, ohne dass dies für den Benutzer erkennbar wäre.

Für den massenhaften Einsatz von Ladesäulen für die Elektromobilität ist keines der beiden Verfahren geeignet. Ladestationen zum elektrischen Laden von Elektrofahrzeugen sollten möglichst gut gegenüber Vandalismus gesichert sein. Dies verlangt eine vollständige Einhausung der Ladeelektrik samt der Messeinrichtung in einem geschlossenen Gehäuse. Dieses geschlossene Gehäuse verbietet es aber, ein Sichtfenster an der Ladestation vorzusehen, da dieses einen Schwachpunkt in der mechanischen Sicherung der Ladeelektrik darstellt. Andererseits ist das Anbringen eines zweiten Typenschilds an dem Gehäuse nachteilig, da die geforderte Verbindung mit der Messeinrichtung nicht realisierbar ist. Außerdem wäre das Anbringen des zweiten Typenschilds in Anwesenheit eines von der Eichstelle Beauftragten kaum möglich, wenn mehrere Tausend Ladestationen installiert werden müssen.

Darüber hinaus ist es aus Kundensicht viel komfortabler, wenn das Typenschild unmittelbar beim Zugriff auf die Ladestation angezeigt wird. Zukünftig wird der Zugriff auf Ladestationen vermehrt über Computer, mobile Geräte, beispielsweise Mobilfunktelefone oder Smartphones, genutzt werden. Über diese Geräte werden die Ladestationen freigeschaltet. Im Moment der Freischaltung sollten die Benutzer die Möglichkeit des Zugriffs auf das Typenschild haben. Dies kann regelmäßig über ein Display leichter erfolgen, als wenn der Benutzer an der Ladestation nach dem außen am Gehäuse angebrachten Typenschild suchen müsste.

Andererseits birgt die elektronische Verarbeitung des Typenschilds vielfältige Manipulationsmöglichkeiten. So können Eichgültigkeiten und Zählernummer ohne Weiteres manipuliert werden, so dass es für den Messstellenbetreiber bzw. den Stromlieferanten nicht möglich ist, sicher nachzuweisen, dass ein Kunde an einer bestimmten Messstation Strom bezogen hat. Insbesondere muss der Messbetreiber nachweisen können, dass die auf einer Rechnungsposition genannter Strommenge von einem Zähler stammt, der eichrechtlich überprüft wurde und eichrechtlich nicht zu beanstanden ist.

DE102010046174 offenbart ein Verfahren zur Sicherung und Überprüfung der Zeitinformation einer Ladestation. US2010237985 offenbart ein Verfahren zur Sicherung eines Stromzählerdatums, wobei Identifizierungsinformation für das Fahrzeug und die Ladestation überprüft, abgespeichert und in einem späteren Zeitpunkt abgespeichert werden.

Aus diesem Grunde lag dem Gegenstand die Aufgabe zugrunde, eine elektronische Sicherung eines Typenschilds einer Messstelle zur Verfügung zu stellen, welche besonders nutzerfreundlich ist und andererseits einen sicheren Nachweis über die eichrechtliche Zulassung der Messstelle ermöglicht.

Diese Aufgabe wird durch ein Verfahren nach Anspruch 1 sowie eine Vorrichtung nach Anspruch 10 gelöst.

Es ist erkannt worden, dass durch die Verbindung einer elektronischen Repräsentanz des Stromzählerdatums mit einer Signatur einer Eichstelle das Stromzählerdatum gegenüber Manipulationen gesichert werden kann. Insofern wird vorgeschlagen, eine elektronische Repräsentanz des Stromzählerdatums zu erfassen. Ein Stromzählerdatum enthält ein Merkmal zur Identifizierung des Stromzählers, z.B. eine Zeichenfolge. Das Stromzählerdatum kann darüber hinaus weitere Informationen, welche nachfolgend noch dargestellt werden, enthalten.

Aus der elektronischen Repräsentanz des Stromzählerdatums kann ein erster Datensatz erstellt werden. Der Datensatz kann ein Datencontainer sein, in dem die Informationen des Stromzählerdatums, z.B. binär und/oder codiert, enthalten sind.

Der Datensatz kann dafür verwendet werden, eine Prüfsignatur zu erstellen. Um sicherzustellen, dass die auf dem Stromzählerdatum vermerkten Informationen im Nachhinein nicht manipuliert werden können, wird die Prüfsignatur vorgeschlagen. Ein wesentliches Element der Prüfsignatur ist, dass diese mit einem privaten Schlüssel einer Eichstelle erstellt wird. Eine Eichstelle kann ein Eichamt, eine Prüfstelle, eine Benannte Stelle oder dergleichen sein, welcher die Autorität zugesprochen wird, für die Richtigkeit von Messgeräten zu garantieren.

Somit ist die Eichstelle verantwortlich für die Prüfsignatur und somit für die Garantie, dass die Repräsentanz des Stromzählerdatums bzw. der daraus erstellte Datensatz in einem von der Prüfstelle überwachten Verfahren signiert wurde.

Um einem Nutzer die Möglichkeit des Zugriffs auf das Stromzählerdatum zu geben, wird vorgeschlagen, dass ein Tupel aus zumindest der Repräsentanz und der Prüfsignatur erstellt und anschließend über ein Datennetz, insbesondere über ein Weitverkehrsnetz, beispielsweise das Internet, zur Verfügung gestellt wird.

Wenn ein Kunde eine Rechnung über den Bezug von Energie an einer Ladestation enthält, kann in dieser Rechnung beispielsweise eine Messstellenkennung, insbesondere das Merkmal zur Identifizierung des Stromzählers der jeweiligen Ladestation, enthalten sein. Diese Kennung kann der Kunde beim Ladevorgang außen an der Ladestation ablesen. Über das Datennetz kann der Kunde mit dieser Kennung Zugriff auf das Tupel mit der Repräsentanz und der Prüfsignatur haben. Anhand der Prüfsignatur kann der Kunde überprüfen, ob die Repräsentanz unverfälscht ist. Somit kann der Kunde überprüfen, ob der ihm genannte Zähler tatsächlich von einer Eichbehörde abgenommen wurde oder nicht. Der Messstellenbetreiber bzw. der Stromlieferant kann sicher nachweisen, dass die berechnete Strommenge von einem geeichten Zähler gemessen wurde.

Um in der Prüfsignatur Informationen über eine Eichstelle zu sichern, wird vorgeschlagen, dass der Datensatz zusätzlich eine Kennung der Eichstelle und/oder ein in der Eichstelle erfasstes Datum und/oder eine in der Eichstelle erfasste Uhrzeit enthält. Somit können mit Hilfe der Prüfsignatur Informationen über die Eichstelle sowie das Datum oder die Uhrzeit der Eichung vor Manipulationen gesichert werden.

Außerdem ist es möglich, dass in dem Datensatz die Kennung des Stromzählers und/oder eine in dem Stromzähler erfasste Uhrzeit und/oder ein in dem Stromzähler erfasstes Datum und/oder ein in dem Stromzähler erfasster Mess- oder Zählerwert enthalten ist. Dies stellt sicher, dass die Eichstelle Zugriff auf den jeweiligen Stromzähler im Moment des Signierens hatte, da ansonsten die Eichstelle die Signatur über die Kennung des Stromzählers nicht erstellen würde.

Neben dem Tupel aus Repräsentanz und Prüfsignatur kann über das Datennetz ein Zugriff auf einen öffentlichen Schlüssel der Eichstelle bereitgestellt werden. Es kann beispielsweise über den gleichen Zugang bereitgestellt werden, über den der Zugriff auf das Tupel möglich ist. Mit Hilfe des öffentlichen Schlüssels lässt sich die Richtigkeit der Prüfsignatur bzw. des signierten Datensatzes überprüfen.

Die Begriffe "Signatur", "signieren" etc können im Sinne einer elektronischen, datentechnischen Signatur verstanden werden. Durch das elektronische Signieren eines Datenpakets kann sichergestellt werden, dass dieses nicht mehr nachträglich manipuliert werden kann.

Mit Hilfe eines eindeutigen, aus dem Datenpaket und einem der Prüfstelle oder dem Messgerät (Stromzähler) oder der Messstation zugeordneten Schlüssel erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und einem der Prüfstelle oder dem Messgerät (Stromzähler) oder der Messstation zugeordneten Schlüssel errechnet werden. Auch kann eine Signatur unmittelbar aus dem Datenpaket und einem der Prüfstelle oder dem Messgerät (Stromzähler) oder der Messstation zugeordneten Schlüssel errechnet werden. Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Messstation erstellt wurde.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Eine Signatur kann mittels eines SHA-256 Verfahrens ermittelt werden. Hierbei kann beispielsweise eine Variante FIPS 180-2 verwendet werden. Insbesondere kann eine Signatur mit Hilfe eines Elliptic-Curve Kryptografieverfahrens ermittelt werden. Hierbei ist es beispielsweise möglich, dass ein ECC-Verfahren mit 192 Bit verwendet wird.

Vorzugsweise wird eine Signatur mit einem privaten Schlüssel der signierenden Stelle erstellt. Ein zu dem privaten Schlüssel gehörender öffentliche Schlüssel kann dazu genutzt werden, aus der Signatur den Referenzwert zurück zu rechnen. Dann können der errechnete Referenzwert mit dem mit der Signatur signierte Referenzwert verglichen werden und eine Verfälschung daran kann festgestellt werden.

Die Schlüsselpaare können von einem Trust-Center erstellt sein, so dass eine sichere Überprüfung der Identität des Signierenden möglich ist.

Durch die Signatur des Datenpakets ist sichergestellt, dass die dem Datenpaket enthaltenen Daten untrennbar miteinander verbunden sind. Werden die Daten verändert, so ergäbe sich eine andere Signatur. Da der Nutzer zumindest die Kennung der Messstation selber erfassen bzw. auch über ein Datennetz auslesen oder in einer anderen Weise, z.B. über ein gesichertes Kommunikationsverfahren erfahren kann, und diese auch Teil der Daten ist, über die die Signatur erstellt wurde, kann er auch eine Manipulation der Daten feststellen. Sind die Daten nicht manipuliert, kann der Nutzer davon ausgehen, dass für den genannten Zähler eine Eichzulassung besteht, da ansonsten die Signatur mit dem Schlüssel der Eichstelle von der Eichstelle nicht erstellt worden wäre.

Das zu signierende Stromzählerdatum kann ein eichtechnisches Typschild sein. Dieses umfasst, neben der Kennung des Zählers zumindest ein Wert aus einer Betreiberkennung, einer Herstellerkennung, einem Eichdatum, einer Eichgültigkeit, einer Genauigkeitsklasse des Stromzählers, einem zulässigen Temperaturbereich des Stromzählers, einer zulässigen Spannung des Stromzählers, einer zulässigen Stromstärke des Stromzählers, einer zulässigen Frequenz des Stromzählers, einer Bauartzulassungskennung des Stromzählers und/oder einem Bild eines Eichstempels. All diese Informationen, sowie weitern, nicht genannte Informationen können auf einem Typenschild des Stromzählers enthalten sein. Die Gesamtheit der auf dem Typenschild enthaltenen Informationen kann eichrechtlich relevant sein, so dass diese vorzugsweise vollständig, zumindest aber in Teilen, in den Datensatz aufgenommen werden.

Eine besonders komfortable. Überprüfung des Stromzählerdatums ist dann möglich, wenn dieses als Faksimile-Abbild erfasst wird. So kann beispielsweise das Typenschild zusammen mit der Eichplakette als Faksimile-Abbild erfasst werden. Über zumindest dieses Abbild kann dann die Signatur erstellt werden. Bei einem Zugriff auf das Typenschild kann einem Benutzer unmittelbar das Faksimile-Abbild angezeigt werden, so dass er die Typenschilddaten aus dem Bild ablesen kann. Gleichzeitig kann er, durch die Bereitstellung der über diese Daten erstellten Signatur, zusammen mit einem zu dem privaten Schlüssel der Eichstelle passenden öffentlichen Schlüssel, die Richtigkeit der angezeigten Informationen überprüfen.

Auch ist es möglich, dass die in dem Stromzählerdatum enthaltenen Daten in einen Datensatz zusammengefasst werden und als eigenständige oder zusätzliche Repräsentanz des Stromzählerdatums erfasst werden.

Um sicherzustellen, dass während des Eichvorgangs die Eichbehörde Zugriff auf den jeweiligen zu eichenden Stromzähler hatte, wird vorgeschlagen, dass in einem Schritt c0) vor dem Schritt c) zumindest über die Repräsentanz mit einem privaten Schlüssel des Stromzählers eine erste Signatur errechnet wird und dass zumindest die erste Signatur für den Datensatz zum Erstellen der Prüfsignatur verwendet wird. In diesem Fall kann die Eichstelle die erste Signatur anhand des öffentlichen Schlüssels des Stromzählers auf Richtigkeit überprüfen und deren Richtigkeit bestätigen, in dem sie anschließend zumindest diese mit dem eigenen privaten Schlüssel signiert. Dies stellt sicher, dass die Eichbehörde die Richtigkeit der signierten Daten und das Vorhandensein des jeweiligen Zählers garantieren kann.

Um zu einem späteren Zeitpunkt die Richtigkeit der ersten Signatur überprüfen zu können, wird vorgeschlagen, dass die Prüfsignatur zusätzlich über einen öffentlichen Schlüssel des Stromzählers mit dem privaten Schlüssel der Eichstelle errechnet wird. In diesem Fall ist auch der öffentliche Schlüssel des Stromzählers mit Hilfe der Prüfsignatur signiert.

Um sicherzustellen, dass die signierende Eichstelle auch tatsächlich Zugriff auf den Zähler im Moment des Signierens des Datensatzes mit zumindest der privaten Signatur des Zählers hatte, wird vorgeschlagen, dass in dem Schritt c0) die erste Signatur zusätzlich über eine elektronische Kennung der Eichstelle mit dem privaten Schlüssel des Stromzählers errechnet wird. Die Eichstelle kann somit mit Hilfe der ersten Signatur garantieren, dass sie Zugriff auf den Zähler in dem Moment hatte, in dem der Zähler mit seinem privaten Schlüssel die erste Signatur errechnet hat. Somit kann die Eichstelle sicherstellen, dass die erste Signatur auch tatsächlich von dem Zähler erstellt wurde, der in den signierten Daten angegeben wird. Außerdem kann beim Errechnen des Prüfsignatur erneut überprüft werden, ob die richtige Kennung der Eichstelle vorhanden war und beim Signieren mit dem privaten Schlüssel der Eichstelle kann die Eichstelle garantieren, dass diese Zugriff auf ihre eigene Kennung in der ersten Signatur hatte.

Eine weitere Sicherheit kann dadurch gewährleistet sein, dass in einem Schritt c1) nach dem Schritt c) über die Prüfsignatur mit einem privaten Schlüssel des Stromzählers eine zweite Signatur errechnet wird und dass die zweite Signatur als Prüfsignatur bereitgestellt wird. Dies stellt sicher, dass der Zähler nach dem Eichen in der Eichstelle Zugriff auf Prüfsignatur hatte.

Gemäß einem vorteilhaften Ausführungsbeispiel wird vorgeschlagen, dass in dem Tupel aus zumindest der Repräsentanz und der Prüfsignatur, die Prüfsignatur als Metadaten der Repräsentanz angefügt wird. Die Repräsentanz kann somit durch ein Programm unmittelbar angezeigt werden und die Metadaten können gleichzeitig geladen werden. Mit Hilfe der Metadaten ist es möglich, die Unverfälschtheit der Repräsentanz zu überprüfen.

Ein weiterer Aspekt ist eine Vorrichtung nach Anspruch 10.

Über eine Schnittstelle kann es möglich sein, die Repräsentanz des Stromzählerdatums einzulesen und einen entsprechenden Datensatz aus dieser Repräsentanz zu erstellen. Hierzu kann beispielsweise eine Schnittstelle eines Stromzählers verwendet werden. Beispielsweise über eine serielle oder parallele oder eine andere Schnittstelle, z.B. Lan, Ethernet, WLAN, Bluetooth, NearFieldCommunication, Infrarot, RF Funk oder dergleichen können die Stromzählerdaten ausgelesen werden. Auch kann eine Kennung des Stromzählers eingelesen werden. Außerdem kann ein öffentlicher Schlüssel des Zählers ausgelesen werden.

Mit Hilfe der Eingabeeinrichtung ist es möglich, dass die Eichstelle eine Konformität des Stromzählers mit Messtoleranzen bestätigt. Dies kann eine manuelle Bestätigung sein oder auch durch einen Programmbefehl eines Eichprogramms der Eichstelle erfolgen.

Anschließend kann ein privater Schlüssel der Eichstelle eingelesen werden. Vorzugsweise ist der Zugriff auf den privaten Schlüssel der Eichstelle gesichert, beispielsweise durch ein Passwort. Auch ist es möglich, dass der Zugriff auf den privaten Schlüssel mechanisch gesichert ist, insbesondere dass der private Schlüssel der Eichstelle auf einem mobilen Datenträger, beispielsweise einem USB-Stick, gespeichert ist und zum Erstellen des Signatur kurzzeitig zur Verfügung gestellt wird.

Über eine Recheneinrichtung kann die Prüfsignatur über zumindest den ersten Datensatz erstellt werden. Dabei wird mit den privaten Schlüssel der Eichstelle der Datensatz signiert. Im Anschluss daran kann über eine Ausgabeeinrichtung ein Tupel aus der Repräsentanz und der Prüfsignatur ausgegeben werden. Außerdem kann ein öffentlicher Schlüssel der Eichstelle ausgegeben werden. Zusätzlich kann der öffentliche Schlüssel des Zählers, der zuvor eingelesen wurde, ausgegeben werden.

Die zuvor genannten Verfahren können auch als Computerprogramm oder als auf einem Speichermedium gespeichertes Computerprogramm realisiert werden. Hierbei kann zählerseitig und/oder eichstellenseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer eine Ausführungsbeispiele zeigenden Zeichnung näher erläutert. In der Zeichnung zeigen:
- Fig. 1: ein Typenschild eines Messgeräts als Stromzählerdatum;
- Fig. 2: einen Ablauf eines gegenständlichen Verfahrens;
- Fig. 3: eine schematische Ansicht einer gegenständlichen Vorrichtung.

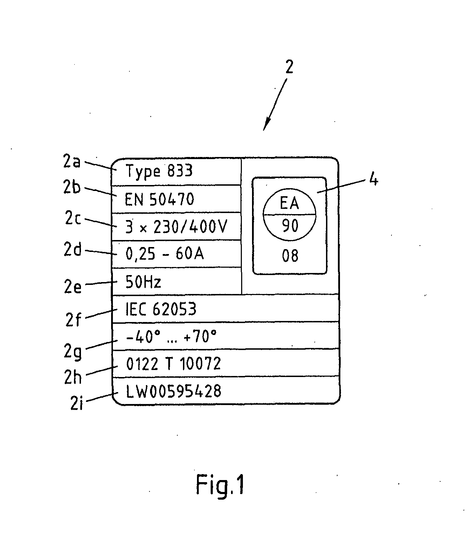

Fig. 1 zeigt ein Typenschild 2 mit einer Vielzahl von Datenfeldern 2a-2i, sowie einer Eichplakette 4. Die in den Datenfeldern 2a-i enthaltenen Datenfelder zusammen mit der Eichplakette 4 können in ihrer Gesamtheit oder als Teilmenge das Stromzählerdatum darstellen.

Das Datenfeld 2a kann beispielsweise eine Typenbezeichnung enthalten. Das Datenfeld 2b kann beispielsweise eine Herstellerkennung enthalten. Das Datenfeld 2c kann beispielsweise eine maximale Spannung des Stromzählers benennen. Das Datenfeld 2d kann beispielsweise eine minimale und eine maximale Stromstärke des Stromzählers benennen. Das Datenfeld 2e kann beispielsweise eine Betriebsfrequenz des Stromzählers benennen. Das Datenfeld 2f kann beispielsweise eine Bauartzulassung des Stromzählers benennen. Das Datenfeld 2g kann beispielsweise einen Temperaturbereich des Stromzählers benennen. Das Datenfeld 2h kann beispielsweise eine Genauigkeitsklasse des Stromzählers angeben. Das Merkmal 2i kann beispielsweise eine Zeichenfolge sein, die eine eindeutige Kennzeichnung des Stromzählers ist und als Stromzähler ID oder Kennung bezeichnet werden kann.

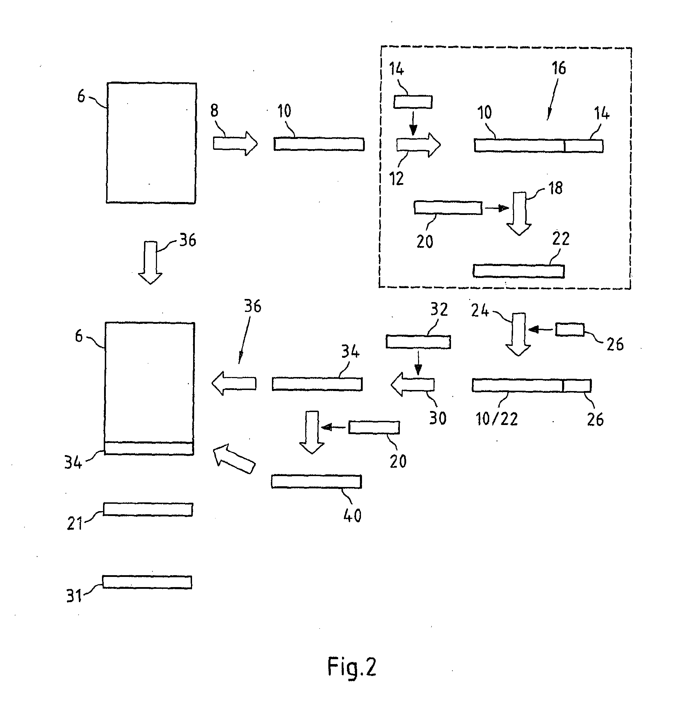

Das Typenschild 2 mit den in den Datenfeldern 2a-i enthaltenen Informationen sowie die Eichplakette 4 kann bildlich erfasst werden. Ein solches Faksimile-Abbild kann für die weitere Verarbeitung verwendet werden. Dies ist beispielsweise in der Fig. 2 dargestellt.

In der Fig. 2 ist beispielsweise ein Faksimile-Abbild 6 des Typenschilds 2 zusammen mit der Eichplakette 4 dargestellt. Das Faksimile-Abbild 6 kann als Grundlage für die eichtechnische Sicherung des Stromzählerdatums verwendet werden. In einem ersten Schritt 8 kann aus dem Faksimile-Abbild 6 ein Datensatz erstellt werden. Der Datensatz ist vorzugsweise ein Hash-Code 10. Der Hash-Code 10 kann aus einer injektiven Abbildung des Faksimile-Abbildes 6 erstellt werden. Der Hash-Code 10 ist vorzugsweise ein binärer Datensatz.

Im Anschluss daran kann in einem Schritt 12 eine eindeutige Kennung der Eichstelle 14 an den Hash-Code 10 angefügt werden, so dass ein zu signierender Datensatz 16 aus Hash-Code 10 und eindeutiger Kennung der Eichstelle 14 gebildet wird.

In einem Schritt 18 kann unter Verwendung eines privaten Schlüssels 20 des Stromzählers eine erste Signatur 22 über den Datensatz 16 erstellt werden.

Wie zu erkennen ist, sind die Schritte 12, 18 gestrichelt umrandet, was zum Ausdruck bringen soll, dass diese Schritte optional sind. Jeder einzelne Schritt kann unabhängig vom jeweiligen anderen Schritt verwendet werden.

In einem Schritt 24 kann entweder an die erste Signatur 22 oder den Hash-Code 10 eine eindeutige Kennung des Stromzählers 26 angefügt werden. Die eindeutige Kennung des Stromzählers 26 kann beispielsweise die Information aus dem Datenfeld 2i des Typenschilds 2 sein.

Es bildet sich ein Datensatz 28 aus entweder Hash-Code 10 oder erste Signatur 22 und eindeutiger Kennung des Stromzählers 26.

Über den gebildeten Datensatz 28 kann in einem Schritt 30 unter Verwendung eines privaten Schlüssels 32 der Eichstelle eine Signatur 34 errechnet werden. Die über den Datensatz erstellte Signatur 34 kann als Prüfsignatur 34 ausgegeben werden.

Im Anschluss daran kann die Prüfsignatur 34 in einem Schritt 36 als Metadaten an das Faksimile-Abbild 6 des Typenschilds 2 angefügt werden. Zusätzlich hierzu kann ein zu dem privaten Schlüssel des Stromzählers 20 passender öffentlicher Schlüssel des Stromzählers 21 angefügt werden. Darüber hinaus kann ein zu dem privaten Schlüssel der Eichstelle 32 passender öffentlicher Schlüssel der Eichstelle 31 angefügt werden.

In einem weiteren optionalen Schritt 38 kann über die Prüfsignatur 34 unter Verwendung des privaten Schlüssels des Stromzählers 20 eine weitere Signatur 40 errechnet werden. In diesem Fall wird das Faksimile-Abbild 6 mit der Signatur 40 und nicht der Prüfsignatur 34 als Metadaten ergänzt.

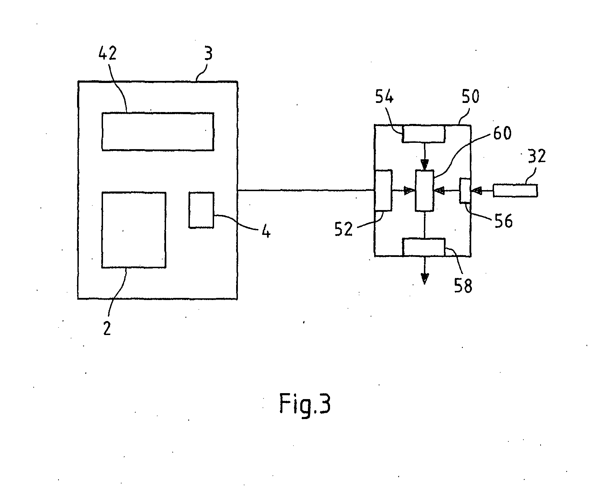

Fig. 3 zeigt den Aufbau einer Vorrichtung 50 zur Durchführung eines beschriebenen Verfahrens. Die Vorrichtung 50 ist über eine Schnittstelle 52 mit einem Stromzähler 3 verbunden. An dem Stromzähler 3 ist zum Einen das Typenschild 2 und zum Anderen die Eichplakette 4 angeordnet. Zu erkennen ist, dass der Stromzähler 3 ein Sichtfeld 42 aufweist, über das ein Benutzer eine gemessene Strommenge ablesen kann.

Über die Schnittstelle 52 können Daten des Typenschilds 2, insbesondere aus dem Datenfeldern 2a-i sowie der Eichplakette 4 ausgelesen werden können. Auch ist es möglich, dass über die Schnittstelle 52 ein Faksimile-Abbild 6 des Typenschilds 3 zusammen mit der Eichplakette 4 in das Gerät 50 eingelesen werden kann.

Die über die Schnittstelle 52 eingelesenen Daten werden in dem Gerät 50 einen Datensatz 10 umgewandelt.

Über eine Eingabeschnittstelle 54 ist es möglich, die Konformität des Messgerätes 3 mit Messtoleranzen zu bestätigen, insbesondere zu bestätigen, dass das Messgerät 3 allen eichrechtlichen Voraussetzungen genügt.

Zusätzlich kann über eine Schnittstelle 56 ein privater Schlüssel der Eichbehörde 32 eingelesen werden.

Der Datensatz 10 bzw. ein daraus gebildeter Hash-Code wird in den Prozessor 60 mit einer eindeutigen Kennung des Stromzählers 26 verknüpft. Über diese Verknüpfung wird mittels des eingelesenen privaten Schlüssels der Eichbehörde 32 in dem Schritt 30 eine Signatur 34 erstellt. Die resultierende Signatur 34 wird über die Schnittstelle 58 ausgegeben.

Die ausgegebene Signatur 34 kann an das Faksimile-Abbild 6 angefügt werden. Da das Faksimile-Abbild Grundlage der Signatur 34 war, kann mit Hilfe der Signatur 34 und einem öffentlichen Schlüssel der Eichbehörde überprüft werden, ob die angefügten Daten unverfälscht geblieben sind.

Mit Hilfe des gezeigten Verfahrens und der gezeigten Vorrichtung ist es möglich, die Korrektheit von eichrechtlich relevanten Daten sicherzustellen, ohne dass eine Eichplakette und ein Typenschild unmittelbar am Stromzähler angeordnet ist.

## Patentansprüche

1. Verfahren zur elektronischen Sicherung eines Stromzählerdatums umfassend:
a) Erfassen einer elektronischen Repräsentanz (6) des Stromzählerdatums (2, 4),
b) Erstellen eines ersten Datensatzes (10) zumindest aus der Repräsentanz (6),
c) Erstellen einer Prüfsignatur (34) über zumindest den ersten Datensatzes (10) durch Signieren des ersten Datensatzes (10) mit einem privaten Schlüssel (32) einer Eichstelle,
d) Erstellen eines Tupels aus zumindest der Repräsentanz (6) und der Prüfsignatur (34),
e) Bereitstellen des Tupels über ein Datennetz **dadurch gekennzeichnet, dass** das Stromzählerdatum ein Merkmal zur Identifizierung des Stromzählers ist und dieses als Faksimile-Abbild erfasst-wird.

2. Verfahren nach Anspruch 1, **dadurch gekennzeichnet, dass** der Datensatz (10) zusätzlich zumindest eines aus:
- einer Kennung der Eichstelle,
- eines in der Eichstelle erfassten Datums und/oder einer Uhrzeit,
- einer Kennung eines Stromzählers, und/oder
- eines in einem Stromzähler erfassten Datums und/oder einer Uhrzeit,
umfasst.

3. Verfahren nach Anspruch 1 oder 2, **dadurch gekennzeichnet, dass** das Stromzählerdatum (2, 4) ein eichtechnisches Typenschild ist und zumindest einen Wert aus:
- einer Betreiberkennung,
- einer Herstellerkennung,
- einem Eichdatum,
- einer Eichgültigkeit,
- einer Genauigkeitsklasse des Stromzählers,
- einem zulässigen Temperaturbereich des Stromzählers,
- einer zulässigen Spannung des Stromzählers,
- einer zulässigen Stromstärke des Stromzählers,
- einer zulässigen Frequenz des Stromzählers,
- einer Bauartzulassungskennung des Stromzählers, und/oder
- einem Bild eines Eichstempels,
umfasst.

4. Verfahren nach einem der vorangehenden Ansprüche, **dadurch gekennzeichnet, dass** ein Faksimile-Abbild und/oder ein die in dem Stromzählerdatum enthaltenen Daten umfassenden Datensatz als Repräsentanz (6) des Stromzählerdatums erfasst wird.

5. Verfahren nach einem der vorangehenden Ansprüche, **dadurch gekennzeichnet, dass** in einem Schritt c0) vor dem Schritt c) zumindest über die Repräsentanz (6) mit einem privaten Schlüssel (20) des Stromzählers eine erste Signatur (22) errechnet wird und dass zumindest die erste Signatur (22) als Datensatz zum Erstellen der Prüfsignatur (34) verwendet wird

6. Verfahren nach einem der vorangehenden Ansprüche, **dadurch gekennzeichnet, dass** die Prüfsignatur (34) zusätzlich über einen öffentlichen Schlüssel des Stromzählers mit dem privaten Schlüssel (32) der Eichstelle errechnet wird.

7. Verfahren nach einem der vorangehenden Ansprüche, **dadurch gekennzeichnet, dass** in dem Schritt c0) die erste Signatur (22) zusätzlich über eine elektronische Kennung (14) der Eichstelle mit dem privaten Schlüssel (20) des Stromzählers errechnet wird.

8. Verfahren nach einem der vorangehenden Ansprüche, **dadurch gekennzeichnet, dass** in einem Schritt c1) nach dem Schritt c) über die Prüfsignatur (34) mit einem privaten Schlüssel (20) des Stromzählers eine zweite Signatur (40) errechnet wird und dass die zweite Signatur (40) als Prüfsignatur bereitgestellt wird.

9. Verfahren nach einem der vorangehenden Ansprüche, **dadurch gekennzeichnet, dass** in dem Tupel aus zumindest der Repräsentanz (6) und der Prüfsignatur (34) die Prüfsignatur (34) als Metadaten der Repräsentanz (6) angefügt werden.

10. Vorrichtung zur Erstellung einer elektronischen Sicherung eines Stromzählerdatums umfassend:
- eine Schnittstelle (52) zum Einlesen einer Repräsentanz (6) des Stromzählerdatums und zum Erstellen eines Datensatzes aus der Repräsentanz,
- eine Eingabeeinrichtung (54) zum Bestätigen einer Konformität des Stromzählers mit Messtoleranzen,
- eine Leseeinrichtung (56) zum Einlesen eines privaten Schlüssels der einer Eichstelle,
- einer Recheneinrichtung (60) zum Erstellen einer Prüfsignatur über zumindest den ersten Datensatzes durch Signieren des ersten Datensatzes mit dem privaten Schlüssel der Eichstelle,
- einer Ausgabeeinrichtung (58) zum Erstellen und Ausgeben eines Tupels aus zumindest der Repräsentanz und der Prüfsignatur **dadurch gekennzeichnet, dass** das Stromzählerdatum ein Merkmal zur Identifizierung des Stromzählers ist und dieses als Faksimile-Abbild erfasst wird.

## Claims

1. Method for electronically securing an electricity meter datum comprising:
a) obtaining of an electronic representation (6) of the current meter datum (2,4)
b) creating a first data record (10) from at least the representation (6),
c) creating a check signature (34) of at least the first data record (10) by signing the first data record (10) with a private key (32) of a calibration instance,
d) creating a tuple of at least the representation (6) and the check signature (34),
e) providing the tuple over a data network
**characterised in that**
the current meter datum is a feature to identify the current meter and is obtained as a facsimile image.

2. Method according to Claim 1, **characterised in that** the data record (10) comprises additionally at least one of the following:
- an identifier of the calibration instance,
- a date and/or time captured in the calibration instance,
- an identifier of an current meter, and/or
- a date and/or time obtained in a current meter.

3. Method according to Claim 1 or 2, **characterised in that** the current met er datum (2, 4) is a calibration type plate and comprises at least one value from the following:
- an operator identifier,
- a manufacturer identifier,
- a calibration date,
- a calibration validity,
- an accuracy class of the current meter,
- a permissible temperature range of the current meter,
- a permissible voltage of the current meter,
- a permissible amperage of the current meter,
- a permissible frequency of the current meter,
- a type approval identification of the current meter, and/or
- an image of a calibration mark.

4. Method according to any one of the preceding claims, **characterised in that** a facsimile image and/or a data record contained in the current meter date is captured as a representation (6) of the current meter datum.

5. Method according to any one of the preceding claims, **characterised in that** in a step cO) prior to step c) at least a first signature (22) is calculated of the representation (6) of the current meter using a private key (20) and that at least the first signature (22) is used as a data record to create the check signature (34).

6. Method according to any one of the preceding claims, **characterised in that** the check signature (34) is also calculated via a public key of the current meter using the private key (32) of the calibration instance.

7. Method according to any one of the preceding claims, **characterised in that** in the step cO) the first signature (22) is also calculated of an electronic identifier (14) of the calibration instance using the private key (20) of the current meter.

8. Method according to any one of the preceding claims, **characterised in that**
in a step cl) after step c) a second signature (40) is calculated of the check signature (34) using a private key (20) of the current meter, and
that the second signature (40) is provided as a check signature.

9. Method according to any one of the preceding claims, **characterised in that** in the tuple comprising at least the representation (6) and the check signature (34), the check signature (34) is added as metadata of the representation (6).

10. Apparatus for creating an electronic security of a current meter datum comprising:
- an interface (52) for reading a representation (6) of the current meter datum and to create a data record of the representation,
- an input device (54) for confirming the compliance of the current meter with measurement tolerances,
- a reading device (56) for reading a private key of a calibration instance,
- a computing device (60) for creating a check signature of at least the first record data by signing the first data record with the private key of the calibration instance,
- an output device (58) for creating and outputting a tuple comprising at least the representation and the check signature,
**characterised in that**
the current meter datum is a feature to identify the current meter and is obtained as a facsimile image.

## Revendications

1. Procédé pour la sécurisation électronique d'une date de compteur d'énergie électrique, comprenant :
a) la saisie d'une représentation électronique (6) de la date (2, 4) du compteur d'énergie électrique,
b) l'établissement d'un premier ensemble de données (10) au moins à partir de la représentation (6),
c) l'établissement d'une signature de vérification (34) avec une clé privée (32) d'un organisme d'étalonnage, en passant par au moins le premier ensemble de données (10), en signant le premier ensemble de données (10),
d) l'établissement d'un tuple à partir au moins de la représentation (6) et de la signature de vérification (34),
e) la fourniture du tuple via un réseau de données, **caractérisé en ce que** la date du compteur d'énergie électrique est une caractéristique servant à l'identification du compteur d'énergie électrique, et cette date est saisie comme une reproduction en fac-similé.

2. Procédé selon la revendication 1, **caractérisé en ce que** l'ensemble de données (10) comprend en plus au moins l'une des données suivantes, à savoir :
- une identification de l'organisme d'étalonnage,
- une date saisie et obtenue auprès de l'organisme d'étalonnage et/ou une donnée d'indication d'heure,
- une identification d'un compteur d'énergie électrique, et/ou
- une date saisie dans un compteur d'énergie électrique et/ou une donnée d'indication d'heure.

3. Procédé selon la revendication 1 ou 2, **caractérisé en ce que** la date (2, 4) du compteur d'énergie électrique est une plaque signalétique métrologique et comprend au moins l'une des valeurs suivantes, à savoir :
- une identification de l'exploitant,
- une identification du fabricant,
- une date d'étalonnage,
- une validité d'étalonnage,
- une classe de précision du compteur d'énergie électrique,
- une plage de températures admissible du compteur d'énergie électrique,
- une tension admissible du compteur d'énergie électrique,
- une intensité de courant admissible du compteur d'énergie électrique,
- une fréquence admissible du compteur d'énergie électrique,
- une identification d'homologation de type du compteur d'énergie électrique, et/ou
- une photo d'un tampon d'étalonnage.

4. Procédé selon l'une quelconque des revendications précédentes, **caractérisé en ce que** l'on saisit une représentation de fac-similé et/ou un ensemble de données comprenant les données contenues dans la date du compteur d'énergie électrique, ledit ensemble de données servant de représentation (6) de la date du compteur d'énergie électrique.

5. Procédé selon l'une quelconque des revendications précédentes, **caractérisé en ce que** pendant une étape c0) se produisant avant l'étape c), une première signature (22) est déterminée par calcul avec une clé privée (20) du compteur d'énergie électrique, en passant au moins par la représentation (6), et **en ce qu'**au moins la première signature (22) est utilisée comme ensemble de données servant à l'établissement de la signature de vérification (34).

6. Procédé selon l'une quelconque des revendications précédentes, **caractérisé en ce que** la signature de vérification (34) est déterminée par calcul avec la clé privée (32) de l'organisme d'étalonnage, en passant en outre par une clé publique du compteur d'énergie électrique.

7. Procédé selon l'une quelconque des revendications précédentes, **caractérisé en ce que** pendant l'étape c0), la première signature (22) est déterminée par calcul avec la clé privée (20) du compteur d'énergie électrique, en passant en outre par une identification électronique (14) de l'organisme d'étalonnage.

8. Procédé selon l'une quelconque des revendications précédentes, **caractérisé en ce que** pendant une étape c1) se produisant après l'étape c), une seconde signature (40) est déterminée par calcul avec une clé privée (20) du compteur d'énergie électrique, en passant par la signature de vérification (34), et **en ce que** la seconde signature (40) est fournie comme signature de vérification.

9. Procédé selon l'une quelconque des revendications précédentes, **caractérisé en ce que** dans le tuple se composant au moins de la représentation (6) et de la signature de vérification (34), la signature de vérification (34) est jointe comme métadonnées de la représentation (6).

10. Dispositif pour l'établissement d'une sécurisation électronique d'une date de compteur d'énergie électrique, comprenant :
- une interface (52) servant à la mise en mémoire d'une représentation (6) de la date du compteur d'énergie électrique et servant à l'établissement d'un ensemble de données à partir de la représentation,
- un dispositif d'entrée (54) servant à la confirmation d'une conformité du compteur d'énergie électrique, avec des tolérances de mesure,
- un dispositif de lecture (56) servant à la mise en mémoire d'une clé privée de l'un des organismes d'étalonnage,
- un dispositif de calcul (60) servant à l'établissement d'une signature de vérification avec la clé privée de l'organisme d'étalonnage, en passant par au moins le premier ensemble de données, en signant le premier ensemble de données,
- un dispositif de sortie (58) servant à l'établissement et à la sortie d'un tuple se composant au moins de la représentation et de la signature de vérification,
**caractérisé en ce que** la date du compteur d'énergie électrique est une caractéristique servant à l'identification du compteur d'énergie électrique, et cette date est saisie comme une reproduction en fac-similé.
